Europäisches Patentamt

(19) European Patent Office

Office européen des brevets

(11) Numéro de publication: **0 126 682**
**B1**

(12) **FASCICULE DE BREVET EUROPEEN**

(45) Date de publication du fascicule du brevet: **02.01.91**

(51) Int. Cl.⁵: **G 11 B 27/36,** G 11 B 7/12,
G 11 B 7/00

(21) Numéro de dépôt: **84400966.2**

(22) Date de dépôt: **11.05.84**

(54) **Procédé et dispositif de calibration de la puissance optique appliquée à un disque optique pour l'enregistrement de données.**

(30) Priorité: **20.05.83 FR 8308425**

(43) Date de publication de la demande:
**28.11.84 Bulletin 84/48**

(45) Mention de la délivrance du brevet:
**02.01.91 Bulletin 91/01**

(84) Etats contractants désignés:
**DE GB IT NL SE**

(56) Documents cités:
**EP-A-0 028 111**
**EP-A-0 044 072**
**EP-A-0 087 174**
**EP-A-0 109 130**
**DE-A-3 131 212**
**FR-A-2 424 603**
**FR-A-2 472 243**

(73) Titulaire: **THOMSON-CSF**
**51, Esplanade du Général de Gaulle**
**F-92800 Puteaux (FR)**

(72) Inventeur: **Romeas, René**
**THOMSON-CSF SCPI 173, bld Haussmann**
**F-75379 Paris Cedex 08 (FR)**
Inventeur: **Bricot, Claude**
**THOMSON-CSF SCPI 173, bld Haussmann**
**F-75379 Paris Cedex 08 (FR)**
Inventeur: **Gerard, Jean-Louis**
**THOMSON-CSF SCPI 173, bld Haussmann**
**F-75379 Paris Cedex 08 (FR)**

(74) Mandataire: **Grynwald, Albert et al**
**THOMSON-CSF SCPI**
**F-92045 PARIS LA DEFENSE CEDEX 67 (FR)**

Courier Press, Leamington Spa, England.

**Description**

La présente invention concerne un procédé de calibration de la puissance optique d'un faisceau de radiation lumineuse de gravure appliquée à un disque optique utilisé pour l'enregistrement de données, en particulier un procédé automatique de calibration pour l'enregistrement de données numériques. La présente invention concerne aussi un dispositif pour la mise en oeuvre de ce procédé.

Les disques optiques numériques de l'art connu sont en général des disques à la surface desquels il a été déposé une couche sensible aux radiations lumineuses, sur laquelle il est possible de graver par l'intermédiaire d'une source de radiations lumineuses (dans le spectre du visible ou non) des informations de type binaire. Cette gravure est obtenue le plus souvent par l'action de la chaleur dégagée par les radiations lumineuses d'un faisceau focalisé, au contact de la couche sensible. La gravure obentue est suivant les cas, constituée soit d'une perforation de cette couche, soit d'une déformation en forme de micro-bulles ou micro-reliefs, soit de toute autre modification de la couche. Il est aisé de constater, dans ces conditions, que la géométrie de la gravure obtenue est étroitement liée à la puissance lumineuse appliquée à la couche sensible et donc que cette puissance doit pouvoir être contrôlée et réglée avec précision.

La puissance lumineuse à appliquer à la couche sensible, pour obtenir une gravure correcte, dépend de plusieurs paramètres et parmi lequels principalement:

de la qualité des éléments optiques entre la couche sensible et la source de radiations lumineuses (lentilles, prismes...), qualité qui d'ailleurs peut s'altérer au cours du temps par variation d'état de surface dû au vieillissement et à l'empoussiérage des éléments;

de l'angle d'incidence du faisceau lumineux de gravure par rapport à la couche, angle dépendant des tolérances du disque et de la mécanique associée;

de la sensibilité du matériau composant la couche elle-même qui peut varier légèrement d'un disque à un autre;

du système utilisé pour l'asservissement de la focalisation du faisceau qui présente des performances limitées; il subiste donc nécessairement une légère erreur de focalisation du spot lumineux sur la couche sensible;

des variations des paramètres de la source de radiations lumineuses elle-même (le plus souvent il s'agit d'un laser à semi-conducteur) susceptibles de varier dans des proportions notables d'une source à une autre et également d'être affectées par le vieillissement;

de la précision limitée du système électronique de contrôle et de réglage de la puissance émise par la source de radiations lumineuses.

On connaît par la demande de brevet européen A 44072 un système de contrôle de focalisation dans un appareil d'enregistrement de données sur disque optique. L'objet de l'invention est de fournir un signal d'erreur fin de focalisation. Il est décrit, dans ce brevet, un système de calibration de la puissance laser. Toutefois cette calibration n'a lieu que lorsque les faisceaux sont focalisés.

En fait, les dispositifs de calibration connus à ce jour ne permettent de contrôler qu'une partie de ces paramètres: par exemple la puissance optique émise par la source peut être commandée à l'aide d'un système de mesure de puissance optique approprié, ce système peut prendre en compte une partie des paramètres du système optique (empoussiérage) mais il est entaché de l'erreur due au système de mesure lui-même, qui de plus peut varier dans le temps. Les paramètres associés au disque et à l'erreur des servomécanismes ainsi qu'aux déformations du spot lumineux ne sont pas pris en compte par un tel système.

On a aussi décrit dans le brevet US—A—4297730 un procédé permettant le réglage automatique de certains paramètres critiques à l'obtention d'un enregistrement optimal, mais dans le domaine de l'enregistrement magnétique.

L'invention se fixe pour but un procédé de calibration palliant les inconvénients qui viennent d'être rappelés.

Le procédé de calibration selon l'invention met en oeuvre un moyen de test de l'ensemble des paramètres cités précédemment et susceptible d'influencer la géométrie de la gravure obtenue.

L'invention a pour objet un procédé de calibration de la puissance optique d'un faisceau focalisé de radiations lumineuses émis par une source, ledit faisceau étant appliqué sur un support optique destiné à l'enregistrement de données et comportant au moins une couche d'un matériau susceptible de modifier des caractéristiques optiques sous l'influence desdites radiations, ce procédé étant utilisé dans un dispositif d'enregistrement de données comprenant des moyens pour focaliser dans la surface dudit support optique un faisceau optique d'écriture modulable électriquement par un signal électrique incident représentatif desdites données, des moyens assurant l'exploration de ladite surface par ledit faisceau d'écriture, des moyens de lecture optoélectriques dont l'interaction avec les modifications de caractéristiques optiques de ladite surface produit un signal électrique de lecture et des moyens de contrôle permettant d'ajuster la puissance du faisceau d'écriture de façon que le signal de lecture reproduise convenablement la distribution temporelle des impulsions constituant ledit signal électrique incident, caractérisé en ce que les moyens de contrôle exécutent les étapes suivantes:

a) dans un premier temps, enregistrement dans des zones différentes des zones de données d'au moins un message comprenant un nombre prédéterminé de mots binaires de test constitués d'une suite d'éléments binaires à une première valeur logique ("1") et à une seconde valeur logique ("0"), les mots binaires étant enregistrés avec plusieurs valeurs étagées de puissance optique de gravure du faisceau de radiations appliqué sur ladite couche de matériau sensible,

b) puis dans un second temps,

— lecture des mots binaires de test ainsi enregistrés,

— mesure pour chaque mot de test de la durée des éléments binaires à la première valeur logique et de la durée des éléments binaires à la seconde valeur logique,

— détermination du rappport entre lesdites durées,

— détermination à l'aide de ce rapport de la puissance optique de gravure optimale, et

— élaboration à partir de cette détermination d'une grandeur de commande optimale de la puissance émise par la source et mémorisation de cette grandeur.

L'invention sera mieux comprise et d'autres caractéristiques et avantages apparaîtront à la lecture de la description qui suit en référence aux figures annexées et parmi lesquelles:

— la figure 1 représente schématiquement un enregistreur de disque optique dans lequel l'invention peut être mise en oeuvre.

— la figure 2 représente un circuit particulier utilisé dans le cadre de l'invention pour la mesure et la commande de la puissance optique émise par une source.

— les figures 3 à 5 sont des diagrammes illustrant plusieurs situations se présentant dans le cadre de la gravure d'informations par voie optique.

— la figure 6 représente un exemple de réalisation d'un circuit de test utilisé dans le cadre de l'invention.

— la figure 7 représente un exemple de réalisation d'un circuit générateur de signaux de synchronisation.

— la figure 8 illustre schématiquement une structure particulière d'un disque optique sur lequel des mots de test ont été enregistrés.

Le dispositif de calibration selon l'invention va tout d'abord être décrit dans ses dispositions principales.

Selon l'invention, il est réservé, par exemple au début et à la fin de la zone utile d'enregistrement d'un disque optique, quelques pistes sur lesquelles, dans un premier temps, un message de configuration binaire particulière est gravé, message délivré par un système d'enregistrement approprié et comportant des enregistrements successifs d'un même mot binaire effectués avec différentes puissances lumineuses étagées de part et d'autre de la valeur de puissance présumée bonne pour obtenir une gravure correcte.

Dans un second temps, on vient relire le message binaire enregistré prédédemment et traiter le signal issu de cette lecture à l'aide de moyens électroniques appropriés, de manière à déterminer quelle puissance optique de gravure a donné les meilleurs résultats. Il est probable d'ailleur que compte tenu de la réponse en puissance des couches sensibles, plusieurs niveaux de puissance aient donné des résultats convenables. Dans ce cas bien sûr, c'est la valeur moyenne de ces différents niveaux que l'on choisit pour les futures gravures.

La valeur de puissance optique correcte une fois déterminée est mise en mémoire électroniquement et sera utilisée pour effectuer tous les enregistrements qui suivront jusqu'à ce qu'il soit jugé utile de déclencher un nouveau test. La périodicité de ces tests peut être, soit déterminée par l'opérateur, soit, de façon préférentielle, déclenchée automatiquement suivant un programme déterminé à l'avance. Ce peut être par exemple, à chaque chargement d'un nouveau disque dans l'appareil de gravure-lecture et à intervalle de temps régulier (toutes les 24 ou 48 h) si le même disque reste en permanence dans l'appareil.

L'intérêt d'avoir des pistes de test au début et à la fin du disque est de pouvoir en même temps mettre en mémoire la loi de correction de puissance de gravure en fonction du rayon. En effet, la loi de variation de la puissance de gravure en fonction du rayon étant déterminée par une interpolation entre les valeurs obtenues pour les puissances nécessaires à la gravure dans la zone centrale et dans la zone périphérique du disque, il est possible d'obtenir pour toute autre valeur du rayon, la puissance nécessaire. De façon préférentielle, le processus de calibration selon l'invention met en oeuvre les mêmes moyens de lecture et de gravure et le même support d'enregistrement que ceux utilisés pour l'enregistrement des messages binaires utiles, une erreur de calibration de la puissance devient de ce fait très improbable.

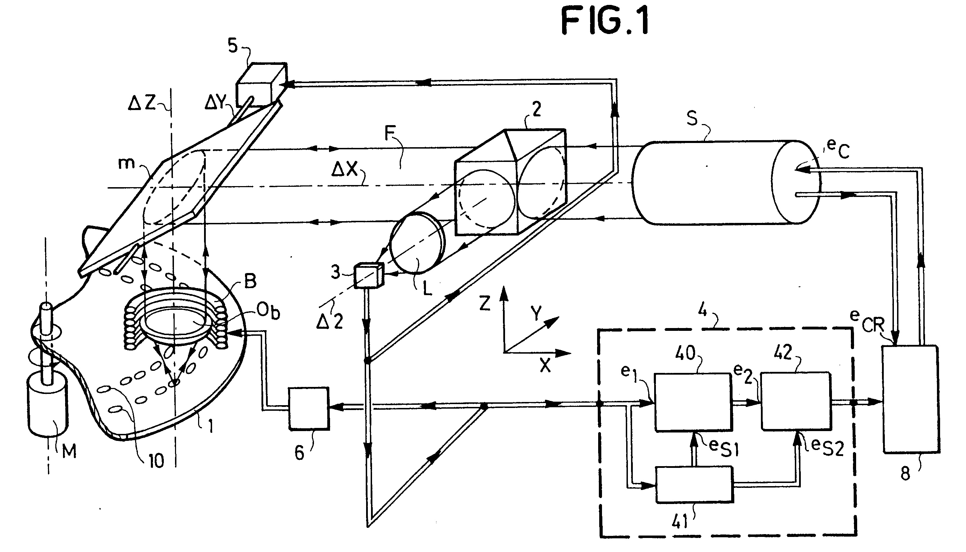

L'invention va maintenant être décrite de façon plus détaillée en référence aux figures 1 à 6.

La figure 1 est un schéma synoptique d'un appareil de gravure-lecture de disques optiques incluant des moyens de calibration de la puissance de gravure pour la mise en oeuvre de l'invention.

Cet appareil comprend des moyens communs à ceux généralement utilisés dans l'art connu et seuls les moyens nécessaires à la compréhension de la présente invention ont été représentés.

Cet appareil est destiné à inscrire sur un disque 1 des informations binaires arrangées selon une configuration géométrique prédéterminée. Pour l'enregistrement de données numériques, il est généralement utilisé une configuration de pistes circulaires concentriques 10, comportant ou non une information préenregistrée de guidage, par exemple des pistes lisses continues préenregistrées ou des "drapeaux" répartis le long des pistes virtuelles et entre lesquels l'information utile est enregistrée.

On peut utiliser un tel disque, soit pour inscrire des informations en un point déterminé d'une des pistes, soit pour lire des informations inscrites en un point quelconque de cette piste. Le disque, par exemple d'un diamètre d'environ 30 cm, est animé d'un mouvement de rotation par convention, autour d'un axe parallèle à l'un des axes, Z, d'un trièdre othonormé XYZ. Ce mouvement est communiqué par un moteur d'entraînement M solidaire du chassis du système optique d'enregistrement-lecture. Dans l'exemple de réalisation illustré sur la figure 1, le dispositif d'accès a une piste prédéterminée 10 du disque 1 comprend une partie fixe comportant une source d'énergie lumineuse et une partie mobile constituée par la tête d'enregistrement-lecture. Comme il est connu, cett dernière comprend un objectif du type microscope $O_b$, solidaire d'une bobine électromagétique B se déplaçant dans le champ magnétique d'un aimant permanent (not représenté) assurant l'asservissement vertical et un miroir galvanométri-que m assurant l'asservissement radial. Les sources d'énergie lumineuse, comme il est également connu, comprennent des sources lasers, par exemple des lasers à gaz helium-néon (He Ne) ou semi-conducteurs. Les lasers à gaz délivrent un faisceau parallèle polarisé dont la section est très faible. Le faisceau laser doit être agrandi de façon à recouvrir la pupille d'entrée de l'objectif, ce quelque soit la position de l'objectif le long de l'axe optique. Les sources à laser semi-conducteur émettent un faisceau divergent inscrit dans un cône de section elliptique. Il est nécessaire alors d'utiliser un organe anamorphoseur et des éléments optiques (lentilles etc...) rendant le faisceau émis cylindrique. Ces dispositions sortent du cadre de l'invention et sont bien connues de l'homme de métier. Il sera supposé dans ce qui suit que le faisceau émis par la source S est un faisceau de rayons parallèles. Il sera supposé égalment, sans que cela soit limitatif, que le faisceau émis par la source S est polarisé linéairement et que la lecture et la détection des informations inscrites s'effectuent par réflexion. Un élément optique séparateur 2 disposé sur le trajet du faisceau de rayons parallèles F permet de discriminer le faisceau incident, émis par la source S, du faisceau réfléchi qui est retransmis à des moyens opto-électroniques de détection 3 associés à un élément de focalisation, représenté sous la forme d'une lentille convergente L.

L'élément optique séparateur 2 est dans l'exemple illustré sur la figure 1 constitué par un cube séparateur de polarisation. Ce cube est associé, en général à un élément de conversion bidirectionnelle de la polarisation linéaire en une polarisation circulaire, élément disposé sur la face de sortie du cube 2, c'est-à-dire la face opposée à la face en regard avec la source S. De telles dispositions sont décrites, parmi d'autres sortant du cadre de l'invention et à titre d'exemple, dans la demande de brevet français publiée FR—A—2 483 664.

On peut également mettre en oeuvre à la place d'un cube séparateur, d'autres moyens également classiques tel qu'un miroir partiellement réfléchissant.

Le faisceau de lumière F focalisé sur le disque est partiellement réfléchi par celui-ci et renvoyé par l'intermédiaire du prisme 2 et de la lentille L sur des cellules de lecture couplées à un amplificateur et comprises dans les moyens opto-électroniques de détection 3 dont la sortie est couplée au dispositif de calibration de l'invention 4 et à des servomécamismes 5 et 6.

Pendant la lecture, comme il est connu, des signaux sont également dérivés des signaux de sortie des moyens opto-électroniques de détection, signaux représentant l'information enregistrée.

La focalisation correcte est assurée par le dispo-sitif d'asservissement 6 agissant sur l'objectif $O_b$ par l'intermédiaire de la bobine B, le suivi de la piste est assuré par le dispositif d'asservissement 5 et le miroir mobile m.

Le dispositif de calibration 4 selon l'invention, dans l'exemple de réalisation concrète représentée sur la figure 1, comprend un ciruit de test 40 recevant sur une entrée $e_1$ les signaux de sortie des moyens opto-électroniques de détection 3, un circuit de synchronisation 41 recevant également les signaux de sortie des moyens opto-électroniques de détection 3 et élaborant des signaux de sysnchonisation. Le circuit de test 40, après traitement et adaptation des siganux reçu, les retransmet à un ciruit de traitement logique de signaux 42 (entrée $e_2$). De façon préférentielle ce circuit 42 constitué par un microprocesseur mais peut être constitué par tout circuit analogue tel que circuit à logique câblé ou réseau logique programmable (connu sous l'abréviation anglo-saxonne: "P.L.A.").

Ces circuits 42 commandent la puissance optique émise par la source S (entrée $e_o$) par l'intermé-diaire d'un circuit de commande 8 qui reçoit en rétroaction (entrée $e_{CR}$) des signaux représentatifs de cette puissance émise.

Le circuit 41 fournit des signaux de sysnchroni-sation aux circuits 40 (entrée $e_{S1}$) et 42 (entrée $e_{S2}$).

Les différents composants du dispositif selon l'invention vont être maintenant précisés.

Il n'y a pas lieu de décrire en détail les moyens opto-électroniques de détection 3 qui peuvent être communs à l'art connu. Ils comprennent des éléments photo-détecteurs, par exemple une cellule quatre quadrants du type décrit dans la demande de brevet français publiée FR—A—2 483 664.

Cette cellule est suivie d'étages amplificateurs qui élaborent en sortie des signaux représentatifs de l'état de gravure du disque optique 1, c'est-à-dire de la lecture des informations inscrites sur les pistes 10.

De ces mêmes signaux, peuvent être extraits des signaux de synchronisation, par exemple de la manière décrite dans la demande de brevet français déposée sous le No. 8204218 le 12 Mars 1982 au nom de la Demanderesse. Ces signaux de synchronisation servent à échantillonner la transmission des signaux de lecture des circuits de test 40 aux circuits de traitement logiques 42 puis aux circuits de commande 8.

Ces circuits de traitement logique, s'il s'agit d'un microprocesseur, selon un aspect avantageux de l'invention, peuvent avoir un rôle multiple. En effet, outre le rôle spécifique qu'ils jouent dans le cadre de l'invention, ils peuvent également être utilisés pour les autres tâches de gestion du fonctionnement de l'appareil de lecture-écriture de disque optique.

En réalité, dans une variante préférée, le dispositif de l'invention utilise en temps partagé les moyens de traitement de données, généralement un microprocesseur, dont sont munis ce type d'appareil. Il suffit de prévoir un jeu d'intructions spécifiques à la réalisation du procédé de l'invention, mis en mémoire sous toute forme convenable, généralement enregistrées dans une mémoire fixe de commande ("R.O.M"), sous la forme d'un programme résident. Dans ce qui suit, pour simplifier, on considèrera que les circuits de commande 42 sont constitués par un microprocesseur.

Dans un exemple de réalisation particulière, ce microprocesseur 42 de commande de l'appareil envoie au système de commande 8 de la puissance lumineuse émise par la source S un ordre d'écriture, à des puissances préalablement programmées, de huit messages binaires, qui peuvent être, dans l'exemple choisi, huit fois un train de 64 bits, et étagées suivant une loi linéaire de part et d'autre d'une valeur supposée à priori indiquée pour obtenir une gravure correcte.

Cette détermination à priori peut être obtenue par l'expérience, par essais statistiques, ou par le calcul.

On suppose que le rapport cyclique des signaux binaires de commande d'inscription est égal à l'unité.

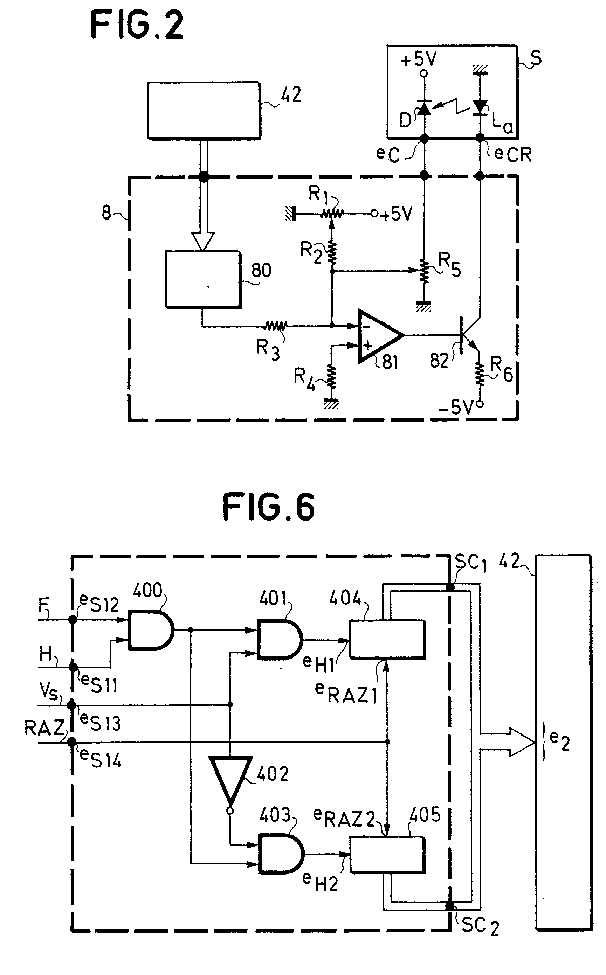

La figure 2 représente une réalisation particulière du dispositif de de commande 8 de la puissance lumineuse émise par la source S.

Le microprocesseur 42 de commande de l'appareil envoie l'information de commande de puissance par l'intermédiaire de quatre lignes de transmission à un convertisseur numérique analogique 80 disposé comme étage d'entrée dans les circuits de commande de puissance 8. Il est donc possible d'obtenir à la sortie du convertisseur 80 seize niveaux de courant différents et régulièrement étagés. Parmi ces seize niveaux, huit sont sélectionnés par le microprocesseur. Un amplificateur différentiel 81 amplifie le courant de sortie du convertisseur 80 et commande par l'intermédiaire d'un étage amplificateur de puissance à transistor 82 le courant traversant une diode laser comprise dans la source S (entrée $e_c$). Une cellule photoélectrique D, est couplée à la face d'émission arrière de cette diode laser S et le courant de cette cellule D (sortie $e_{cR}$) est envoyé en contre-réaction sur l'amplificateur différentiel 81 (entrée d'inversion−) de manière à obtenir une émission de lumière bien contrôlée et stable devant les variations de température.

Il est par ailleurs prévu un jeu de résistances et de potentiomètres $R_1$ à $R_6$ pour polariser et régler les points de repos des différents éléments mis en jeu. En particulier le taux de contre-réaction peut être réglé à l'aide du potentiomètre R5 disposé entre l'anode de la photodiode D et un potentiel de référence choisi par convention comme étant celui de la terre. L'entrée directe (+) de l'amplificateur différentiel 81 est également reliée, via une résistance $R_4$, à la terre. Le point de repos de l'entrée d'inversion (−) de cet amplificateur est réglé à l'aide d'un potentiomètre disposé entre une source de tension, égale à +5V dans l'exemple choisi par ailleurs à la cathode de la photodiode D, et la terre. Le curseur de ce potentiomètre est connecté via une résistance $R_2$ à l'entrée d'inversion de l'amplificateur 81, celle-ci étant par ailleurs connectée à la sortie du convertisseur numérique-analogique 80 via une résistance $R_3$. Enfin, le transistor 82 de l'étage d'amplification de puissance étant du type NPN dans l'exemple illustré sur la figure 2, l'émetteur de celui-ci est relié, via une résistance $R_6$, à une source de tension négative, −5V.

Naturellement tous ces éléments sont décrits qu'au titre de simple illustration d'un exemple d'une réalisation concrète des dispositifs de l'invention et sont susceptibles de nombreux autres choix technologiques à la portée de l'homme de métier pour achever les fonctions des moyens de commande de la puissance d'émission de la source S.

Une fois inscrits sur le disque optique 1, dans des zones réservées à cet effet, les mots binaires vont être relus et l'effet du niveau de puissance émise sur les paramêtres caractéristiques de la gravure va être évalué et, de cette évaluation, va être déterminée la puissance optique d'émission nécessaire pour obtenir une gravure optimale.

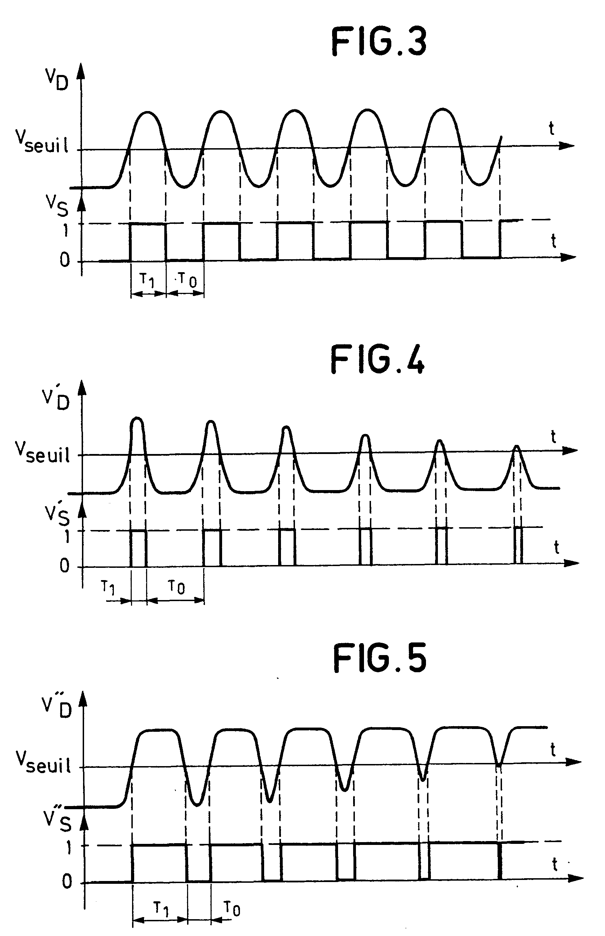

Sur la figure 3, il a été représenté un diagramme illustrant l'allure de signaux, par exemple des signaux de tension, issus de la conversion opto-électronique du faisceau de radiations lumineuses réfléchies par la surface gravée du disque optique 1 (figure 1) par l'organe opto-électronique 3. La courbe supérieure illustre l'évolution en fonction du temps des signaux $V_D$ présents sur la sortie de cellules photo-électriques comprises dans l'organe opto-électronique 3 et la courbe inférieure l'évolution de signaux $V_S$ issus de la mise en forme des signaux $V_D$, par exemple à l'aide de circuits classiques à seuil fonctionnant en tout ou rien. Ces signaux présentent deux niveaux logiques "0" et "1" associés chacun à un niveau logique lu correspondant également à un bit "0" ou "1" inscrit sur le disque.

Sur la figure 3 est représenté un signal lu $V_D$ (et mis en forme $V_S$) correspondant à une puissance de gravure optimale. Il s'ensuit que l'amplitude des signaux lus $V_D$ voient leur amplitude varier symétriquement autour d'une valeur moyenne $V_{seuil}$, utilisé comme valeur de seuil. Il s'ensuit également que le rapport cyclique des signaux mis en forme $V_S$ est égal à l'unité ou du moins très proche de cette valeur. Ce rapport cyclique est le rapport $(T_1/T_0)$ représentant les durées respectives du signal $V_s$ à l'état "1" ($T_1$) et à "0" ($T_0$), c'est-à-dire également la longueur des gravures représentant les inscriptions d'un bit "1" et d'un bit "0" puis qu'il existe une correspondante bi-univoque entre durées du signal lu et longueurs d'inscription compte-tenu de la vitesse de rotation du disque 1.

Sur la figure 4, ont été représentés des signaux correspondant à une puissance de gravure trop faible. En outre, pour mieux illustrer le phénomène, il a été supposé que la puissance de gravure décroissait en fonction du temps (de gauche à droite sur la figure 4).

Si l'on suppose la valeur de seuil $V_{seuil}$ constante, on constate que les variations d'amplitude des signaux plus $V'_D$ deviennent de lus en plus dissymétriques par rapport a cette valeur de seuil. Il s'ensuit que le rapport cyclique (T1/T0) des signaux mis en forme s'écarte de plus en plus également de la valeur optimale, c'est-à-dire de l'unité. Dans le cas présent, la durée des signaux correspondant à une gravure d'un bit "1" diminue, ce qui se conçoit aisément, la couche de matériau sensible aux radiations présentant généralement un seuil de sensibilité et la distribution d'énergie d'un faisceau laser pouvant être approximée à une répartition Gaussienne, la longueur d'une perturbation de la couche de ce matériau correspondant à l'exposition effective aux radiations diminue corrélativement à la puissance optique véhiculée par les radiations.

Il doit être bien entendu qu'une gravure ne corresppond à un bit à la valeur "1" logique que par convention. La convention inverse pourrait tout aussi bien être adoptée.

Le diagramme de la figure 5 illustre l'effet inverse, c'est-à-dire lorsque la puissance émise par la source laser S est trop élevée. Le rapport cyclique (T1/T0) des signaux $V_s$ après mise en forme des signaux lus $V_D$ est alors plus grand que l'unité et augmente corrélativement avec l'augmentation de la puissance optique reçue par la couche sensible lors de la gravure.

Il est aisé, à l'aide de circuits appropriés, de mesure les durées $T_1$ et $T_0$ et de déterminer ainsi quelle est la puissance ayant donné une gravure correcte, c'est-à-dire celle pour laquelle le rapport cyclique est le plus proche de l'unité.

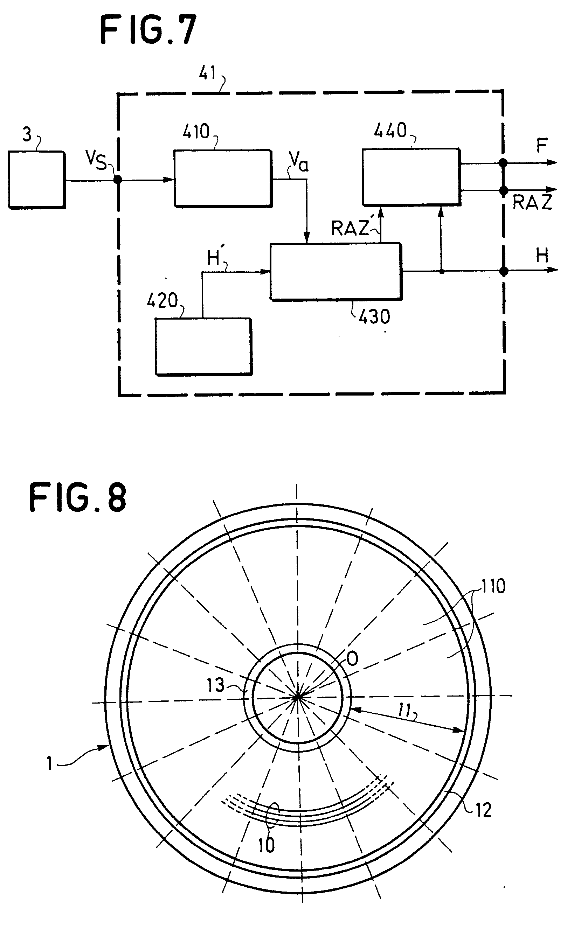

La figure 6 représente un exemple de réalisation pratique de circuits de test 40 destinés à mesurer les durées $T_1$ et $T_0$.

Un signal d'horloge H délivré par le circuit de synchronisation (Figure 1: 41) qui sera décrit en détail dans ce qui suit et de fréquence égale à huit fois celle du train de bits de l'enregistrement dans cet exemple de réalisation, est transmis par l'entrée $e_{S11}$ à une première entrée d'une porte logique "ET":400. Cette porte logique 400 laisse passer les impulsions d'horloge pendant un créneau F d'une durée égale à 64 bits, correspondant aux trains de 64 bits précédemment gravés. Ce créneau F est également fourni par le circuit de synchronisation (entrée $e_{S12}$) et transmis à une seconde entrée de la porte logique 400. Les impulsions d'horloge sont aiguillées d'une part vers un compteur 404 par l'intermédiaire d'une première entrée d'une porte logique "ET":401 lorsque l'état d'un signal $V_s$ provenant de la lecture est au niveau "1" (entrée $e_{S13}$), signal transmis à une seconde entrée de la porte logique 401, et, d'autre part, vers un compteur 405 par l'intermédiaire d'une porte logique "ET":403 lorsque l'état du signal $V_s$ provenant de la lecture est au niveau zéro; signal transmis à la porte "ET":403 par un inverseur 402.

Les compteurs 404 et 405 sont, dans l'exemple illustré, des compteurs binaires à sorties parallèles $SC_1$ et $SC_2$. Les sorties des portes logiques "ET":401 et 403 sont connectées à des entrées d'incrémentation, $E_{H1}$ et $e_{H2}$, respectivement des compteurs 404 et 405.

Les compteurs 404 et 405 sont remis à zéro par un signal RAZ avant le début du créneau F transmis à des entrées de remise à zéro $e_{RAZ1}$ et $e_{RAZ2}$. On dispose donc à la fin du créneau F de durée égale à 64 bits, de la somme des impulsions d'horloge intervenues pendant les trente deux états successifs à "1" du signal $V_s$ sur la sortie du compteur 404 et de la somme des impulsions d'horloge intervenues pendant les trente deux états successifs à zéro du signal $V_s$ sur la sortie du compteur 405. Les sorties parallèles $SC_1$ et $SC_2$ des compteurs 404 et 405 sont connectées au microprocesseur 42 de commande de l'appareil qui peut donc effectuer la comparaison entre les valeurs logiques véhiculées par les sorties $SC_1$ et $SC_2$ et déterminer ainsi le rapport $T_1/T_0$ (figures 3 à 5), ce sur une moyenne effectuée sur 64 bits pour plus de précision.

Si l'on a enregistré plusieurs trains successifs de 64 bits ou plus, avec des puissances étagées comme il a été décrit en relation avec les figures 3 à 5, il est possible au microprocesseur 42 de déterminer laquelle de ces puissances de gravure a donné le rapport $T_1/T_0$ le plus proche de l'unité, et de mettre en mémoire cette valeur de puissance pour effectuer les gravures ultérieures.

La figure 7 illustre un exemple de réalisation concrète du circuit de synchronisation 41 (figure 1).

A ce circuit sont dévolues les tâches, d'une part, de reconnaissance du début d'un mot de test et d'autre part, de génération d'un signal F représentant une fenêtre de temps, de durée égale à la durée totale du nombre de bit du mot de test (soixante quatre dans l'exemple choisi) et d'un signal d'horloge H en phase sur les signaux lus.

Il faut tout d'abord reconnaître, parmi toutes les informations inscrites sur le disque, les informations spécifiques représentant les mots de test. De nombreuses méthodes sont connues. De façon préférentielle, bien que non limitative, on utilisera dans le cadre de l'invention l'enseignement de la demande de brevet français No. 8204219 déposée le 12 Mars 1982 au nom de la Demanderesse.

Selon cette demande de brevet, les informations utiles enregistrées sont associées à des informations spécifiques ou "drapeaux" servant à resynchroniser les moyens de lecture utillisés. De façon préférentielle, les informations utiles et les informations spécifiques sont codées suivant le code "N.R.Z."; les données spécifiques étant associées à des durées d'impulsions non-utilisées dans le code "N.R.Z.". Si T est la période qui représente la durée d'un signal binaire élémentaire ou bit et qui correspond à une fréquence de rythme F=1/T, on choisit par exemple pour les informations spécifiques une durée égale à une fois et demi la période T.

Le circuit de synchronisation 41 comprend donc un premier organe 410 que l'on appellera "détecteur de drapeau" recevant les signaux lus $V_S$ délivrés par les circuits opto-électroniques de détection 3 et destinés à discriminer, parmi les informations enregistrées, les informations spécifiques ou drapeaux. Ces informations sont enregistrées au début du mot de test en relation de temps connue avec les informations utiles, c'esct-à-dire la suite alternée de "1" et "0" logiques composant le mot binaire de test (soixante quatre bits dans l'exemple choisi).

Le circuit de synchronisation 41 comprend également un oscillateur 420, par exemple un oscillateur à quartz délivrant un signal H de fréquence multiple de la fréquence bit. Il faut que cette fréquence soit suffisamment élevée pour assurer un fonctionnement précis, par exemple huit fois la fréquence bit F comme il a été rappelé en relation avec la description de la figure 6. Il faut également que ces signaux soient maitenus en phase avec les signaux $V_S$ issus de la lecture et reçus de la sortie des circuits opto-électroniques de détection 3. A cet fin, il est prévu un organe de remise en phase 430 recevant un signal $V_a$ délivré par l'organe 410 détecteur de drapeau et indiquant le début du mot de test, utilisé comme signal d'autorisation de fonctionnement, organe de remise en phase qui génère en retour, à partir des signaux h'horloge H', des signaux d'horloges H qui sont transmis également à un générateur 440 du signal F de fenêtre de temps. Les signaux d'horloge H sont synchronisés sur une des transitions des signaux $V_s$, par exemple le front montant des impulsions représentant un "1" logique.

Accessoirement, à partir du créneau de temps F, peut être généré le signal RAZ de remise à zéro des compteurs 404 et 405 du circuit de test 40 (figure 6).

Les différents organes qui viennet d'être décrits peuvent être réalisés selon les enseignements de la demande de brevet français précitée.

A titre d'exemple, l'organe de discrimination 400 peut être réalisé à base de deux éléments monostables déclenchés, par exemple, par le front montant des impulsions issues de la lecture et générant des impulsions de durée un peu supérieure et un peu inférieure à une fois et demie la période de bit T. L'intersection logique de ces deux impulsions peut être utilisée pour déterminer si l'impulsion issué de la lecture est associée à un drapeau (durée 1,5 T).

Les circuits de remise en phase 430 peuvent être réalisés à l'aide d'un oscillateur du type commandé par la tension ("V.C.O." selon la terminologie anglo-saxonne) et muni d'une boucle de verrouillage de phase ("P.L.L.") comprenant un comparateur de phase, recevant les signaux délivrés par le détecteur de drapeau 410 et l'oscillateur 420. Cet oscillateur est remis en phase à chaque détection de drapeau.

Le générateur 440 de signal fenêtre de temps F peut être constitué à base d'un compteur binaire incrémenté par les signaux d'horloge H. Il est en outre remis à zéro en début de comptage par un signal RAZ' dérivé du signal d'autorisation $V_a$ fourni par le détecteur de drapeau 410 et positionne à un premier état logique, par exemple à l'état logique "1", le signal F. En fin de comptage, c'est-à-dire à capacité maximale qui doit être un multiple entier du nombre de bits du mot de test, il positionne le signal F au second état logique, "0" dans l'exemple choisi. Comme il a été décrit, ces signaux de synchronisation sont utlisés par les circuits de test 40 et de traitement de l'information 42.

Comme il a été indiqué les éléments des circuits peuvent être sélectionnés parmi ceux disponibles couramment dans le commerce. A titre d'exemple, on peut utiliser des circuits intégrés du type 74 F191, HA 5195, un microprocesseur du type 6809 et une diode laser émettant des radiations de puissance optiques 15 mW de longueur d'onde centrée sur 820 nm.

Le test effectué comme il vient d'être décrit peut être répété bien entendu plusieurs fois sur le pourtour du disque, aussi bien dans une zone proche de l'axe de rotation qu'en périphérie afin d'éliminer un éventuel défaut local de la couche sensible qui pourrait conduire à une interprétation erronée du résultat.

Le dispositif selon l'invention nécessite de prévoir des zones réservées pour l'inscription de mots de test, c'est-à-dire des zones non utilisables pour l'enregistrement de données utiles. Cependant cela ne constitue pas une contrainte réelle. En effet, si l'on prévoit 250 pistes en périphérie du disque et la même quantité dans une zone centrale proche de l'axe du disque pour effectuer les tests de calibration, la place occupée sur le disque est typiquement inférieure à 0,5 millimètre de largeur totale pour chaque groupe de 250 pistes, ce qui est trés faible sur un disque de 30 centimètres de diamètre. De plus ces pistes, compte tenu d'une exigence plus faible en taux d'erreur que pour la gravure utile, peuvent être placées en dehors de la zone généralement utilisée pour la gravure des données numériques utiles, juste avant le début et juste après la fin de cette zone. Une telle disposition est illustrée par la figure 8.

Dans le cadre des applications envisagées pour l'enregistrement de données de type numérique, il est d'usage d'utiliser des disques dont le diamètre est généralement 30 cm comme il a été rappelé et comprenant généralement environ 40 000 pistes 10 réparties sur une couronne 11 de largeur 8 cm ou zone utile. Le plus souvent les enrgeistrements sont répartis dans des zones délimitées à l'avance ou secteurs angulaires 110. Typiquement, ce nombre de secteurs est de l'ordre de 10 à 25.

Dans cette configuration, on peut donc réserver deux zones annulaires 12 et 13 contigües à la zone d'enregistrement utile 11 et respectivement en périphérie (zone 12) et proche (zone 13) du centre 0 du disque 1. De façon préférentielle les mots de test sont répartis régulièrement dans ces secteurs.

On peut partir de l'hypothèse que l'on peut graver 3200 blocs de 64 bits par piste, soit pour 250 pistes:800 000 blocs. Il est donc possibles, si l'on grave à chaque test quatre groupes de huit blocs répartis sur un tour du disque d'effectuer 25 000 tests autant dans une zone périphérique 12 que dans la zone intérieure 13.

Cela représente, dans le cas d'une utilisation intensive du disque et à raison d'un test toutes les 24 heures environ 70 années d'utilisation possible du disque, 24 heures sur 24.

On constate donc sur cet exemple de réalisation concrète que la mise en oeuvre du processus de calibration de la puissance émise par la source n'entraîne aucune dégradation sensible ni de la capacité d'enregistrement du disque ni de sa durée de vie, tout en permettant d'intégrer dans le mesure de puissance effectuée un grand nombre de paramètres qui n'étaient pas pris en compte dans les procédés de l'art connu.

On peut résumer les étapes du processus de calibration selon l'invention comme suit:

a) enregistrement d'un nombre prédéterminé de mots binaires de test, chaque mot binaire étant enregistré avec un niveau de puissance optique distinct: chaque mot binaire étant constitué d'une séquence de bits selon une succession régulière aux ètats logiques "0" et "1",

b) lecture de ces mots binaires de test,

c) analyse de chaque mot binaire. Cette analyse étant effectuée de préférence en effectuant la moyenne sur le nombre de bits des mots binaires,

d) détermination à partir de cette analyse de la puissance optique à utiliser,

e) et élaboration à partir de cette détermination d'une grandeur de commande optimale de la puissance émise par la source et la mémorisation de cette grandeur.

Dans des variantes préférées, le processus comprend en outre des étapes supplémentaires d'inscription de plusieurs groupes de mots binaires répartis réglièrement, d'une par, suivant des secteurs angulaires et, d'autre part, dans deux zones, l'une proche de la périphérie, l'autre proche de la zone centrale du disque.

Comme il a été rappelé, la première mesure supplémentaire permet d'effectuer des moyennes qui écartent les risques d'erreurs dues à des dispersions et des aberrations dans les caractéristiques de sensibilité de la couche de matériau sensible aux radiations et la seconde mesure permet d'effectuer une interpolation, et de cette interpolation est déduite la valeur de la puissance optique optimale nécessaire à l'inscription, le ong d'un axe radial, en tenant compte d'une loi de variation prédétermin.

Pour fixer les idées, une valeur moyenne de puissance optimale de gravure du rayon interne de la zone annulaire d'enregistrement (fig. 8:11) est typiquement 8 mW. On procèdera à des essais de part de d'autre de cette valeur avec des incréments de 0,5 mW par exemple.

En ce qui concerne l'interpolation, on constate qu'une valeur moyenne typique de puissance optimale de gravure est 11 mW en rayon externe. On peut diviser la zone annulaire par exemple, en quatre sous-zones annulaires pour lesquelles les valeurs 8, 9, 10 et 11 mW seront retenues dans le cas où les valeurs extrêmes sont 8 et 11 mW.

**Revendications**

1. Procédé de calibration de la puissance optique d'un faisceau focalisé de radiations lumineuses émis par une source (S), ledit faisceau étant appliqué sur un support optique (1) destiné à l'enregistrement de données et comportant au moins une couche d'un matériau susceptible de modifier des caractéristiques optiques sous l'influence desdites radiations, ce procédé étant utilisé dans un dispositif d'enregistrement de données comprenant des moyens (B) pour focaliser dans la surface dudit support optique un faisceau optique d'écriture (F) modulable électriquement par un signal électrique incident représentatif desdites données, des moyens (5, 6) assurant l'exploration de ladite surface par ledit faisceau d'écriture, des moyens de lecture optoélectriques (2, 3) dont l'interaction avec les modifications de caractéristiques optiques de ladite surface produit un signal électrique de lecture ($V_s$) et des moyens de contrôle (4) permettant d'ajuster la puissance du faisceau d'écriture (F) de façon que le signal de lecture reproduise convenablement la distribution temporelle des impulsions constituant ledit signal électrique incident, caractérisé en ce que les moyens de contrôle exécutent les étapes suivantes:

a) dans un premier temps, enregistrement dans des zones (12, 13) différentes des zones de données d'au moins un message comprenant un nombre prédéterminé de mots binaires de test constitués d'une suite d'éléments binaires à une première valeur logique ("1") et à une seconde valeur logique ("0"), les mots binaires étant enregistrés avec plusieurs valeurs étagées de puissance optique de gravure du faisceau de radiations appliqué sur ladite couche de matériau sensible,

b) puis dans un second temps,

— lecture des mots binaires de test ainsi enregistrés,

— mesure pour chaque mot de test de la durée ($T_1$) des éléments binaires à la première valeur logique et de la durée ($T_0$) des éléments binaires à la seconde valeur logique,

— détermination du rapport entre lesdites durées ($T_1/T_0$),

— détermination à l'aide de ce rapport de la puissance optique de gravure optimale, et

— élaboration à partir de cette détermination d'une grandeur de commande optimale de la puissance émise par la source et mémorisation de cette grandeur.

2. Procédé selon la revendication 1, caractérisé en que les mots binaires de test sont écrits sous la forme de suites monotones d'éléments binaires alternativement à une première valeur logique ("1") et une seconde valeur logique ("0") de durées égales.

3. Procédé selon la revendication 2, caractérisé en ce que la valeur de la puissance optique est déterminée par l'obtention d'un rapport ($T_1/T_0$) entre les durées le plus proche de l'unité.

4. Procédé selon l'une quelconque des revendications 1 à 3, caractérisé en ce que le support étant constitué par un disque (1) organisé en secteurs (110), l'étape d'enregistrement comprend l'enregistrement de plusieurs messages de mots binaires régulièrement répartis dans ces secteurs.

5. Procédé selon l'une quelconque des revendications 1 à 4, carctérisé en ce que le support étant constitué par un disque comportant une zone annulaire (11) de rayons interne et externe déterminés, cette zone étant destinée à l'enregistrement d'informations, l'étape d'enregistrement comprend l'enregistrement d'au moins deux messages de mots binaires de test, l'un dans une région (13) de l'axe de rotation (0) située à une distance inférieur ou égale au rayon interne et l'autre dans une région (12) située à une distance de l'axe de rotation supérieure ou égale au rayon externe, et ne ce qu'il comprend une étape supplémentaire de détermination de la loi de variation de la grandeur de commande optimale de la puissance émise le long d'un axe passant par l'axe de rotation, par interpolation des valeurs déterminées pour chacun desdits mots binaires de test et mémorisation de cette loi.

6. Procédé selon l'une quelconque des revendications 1 à 5, caractérisé en ce que chaque mot binaire de test comporte un nombre déterminé de paires d'éléments binaires à des valeurs logiques alternées en ce que la détermination du rapport ($T_1/T_0$) entre les durées à la première valeur logique et à la seconde valeur logique est obtenue en effectuant la moyenne sur ledit nombre déterminé.

7. Procédé selon l'une quelconque des revendications 1 à 6, caractérisé en ce que l'étape d'enregistrement de mots binaires de test est réalisée automatiquement à des intervalles de temps préétablis.

8. Dispositif de mise en oeuvre du procédé selon l'une quelconque des revendications 1 à 7 dans un appareil d'enregistrement-lecture d'informations dans une région prédéterminée (11) d'un support optique (1) comportant au moins une couche de matériau sensible à des radiations lumineuses, comprenant une source (S) d'un faisceau (F) de ces radiations lumineuses, des moyens ($O_b$, m) d'accès à ladite région (11) et de focalisation de ce faisceau (F) sur la couche de matériau sensible pour l'enregistrement d'informations, des moyens opto-électroniques de lecture (3) de ces informations, des moyens de contrôle (4) permettant d'ajuster la puissance du faisceau d'écriture; caractérisé en ce que les moyens de contrôle comprennent des moyens (8) de commande de la puissance optique des radiations émises par la source (S) de manière à graver dans ladite couche de matériau sensible au moins un message comprenant un nombre prédéterminé de mots binaires de test associés à plusieurs valeurs étagées de puissance de gravure, chaque mot de test étant constitué par des éléments binaires alternativement à une première valeur logique ("1") et à une seconde valeur logique ("0"); des moyens opto-électroniques de lecture (3) de ces mots binaires inscrits et de conversion en un signal électrique binaire; des moyens (40) d'évaluation de la durée ($T_1$) des éléments binaires à la première valeur logique ("1") et de la durée ($T_0$) des éléments binaires à la seconde valeur logique ("0"); des moyens (42) de détermination et de mémorisation d'un signal de commande de la puissance optique émise par la source, ces moyens déterminant le rapport ($T_1/T_0$) entre la durée des éléments binaires à la première valeur logique ("1") et la durée des éléments binaires à la seconde valeur logique ("0") et élaborant un signal de commande de la puissance émise par la source (S) donnant la puissance optimale; des moyens (41) de synchronisation du fonctionnement des moyens (40) d'évaluation et des moyens (42) de détermination et de mémorisation et des moyens (41) de commande de la puissance optique émise par la source.

9. Dispositif selon la revendication 8, caractérisé en ce que les moyens (40) d'évaluation des durées des signaux binaires comprennent un premier compteur binaire (403) recevant des signaux d'horloge (H) sur une première entrée ($e_{H1}$) pendant des premiers intervalles de temps ($T_1$) pendant lesquels les signaux binaires lus présentent une première valeur logique ("1") et incrémentés par ces signaux d'horloge (H), un second compteur binaire (404) recevant les signaux d'horloge (H) sur une deuxième entrée ($e_{H2}$) pendant des seconds intervalles de temps ($T_0$) pendant lesquels les signaux binaires lus présentent une seconde valeur logique ("0") et incrémentés par ces signaux, des moyens logiques (401, 402), aiguillant les signaux d'horloge (H) vers le premier compteur binaire (403) pendant les seconds intervalles de temps et vers le second compteur binaire (404) pendant les seconds intervalles de temps, des moyens logiques d'autorisation (400) de la transmission des signaux d'horloge pendant un intervalle de temps total correspondant au temps de lecture et de conversion des mots binaires de test et des moyens de remise à l'état initial (RAZ) des deux compteurs binaires (403, 404); et en ce que les deux compteurs binaires sont des compteurs à sorties parallèles ($SC_1$, $SC_2$) délivrant sur ces sorties respectivement un premier mot binaire représentant la durée totale des signaux binaires à la première valeur logique ("1") et un second mot binaire représentant la durée totale des signaux binaires à la seconde valeur logique ("0").

10. Dispositif selon la revendication 9, caractérisé en ce que les moyens (42) de détermination et de mémorisation d'un signal de commande de la puissance optique émise par la source (S) sont constitués par des moyens de traitement de données comportant une mémoire d'enregistrement de ces données recevant lesdits premier et second mots binaires délivrés par les premier et second compteurs binaires (403, 404); élaborant

le rapport ($T_1/T_0$) entre ces deux mots binaires et mémorisant dans la mémoire de données un mot binaire de commande correspondant à la valeur de puissance optique émise par la source pour laquelle ledit rapport ($T_1/T_0$) est le plus proche de l'unité.

11. Dispositif selon la revendication 10, caractérisé en ce que l'enregistrement de mots binaires de test comprenant l'enregistrement d'au moins deux mots binaires de test, les moyens (42) de traitement effectuent l'interpolation suivant une loi prédéterminée entre les mots de commande correspondant aux valeurs de puissances optiques émises par la source associée à chaque mot binaire de test pour lesquelles ledit rapport ($T_1/T_0$) est le plus proche de l'unité.

12. Dispositif selon l'une quelconque des revendications 10 ou 11, caractérisé en ce que les moyens (42) de traitement de données sont constitués par un microprocesseur.

13. Dispositif selon l'une quelconque des revendications 8 à 12, caractérisé en ce que la source (S) d'émission d'un faisceau (F) de radiations lumineuses étant une diode laser ($L_a$), les moyens de commande (8) de cette source comprennent un convertisseur numérique-analogique (80) recevant des moyens (42) de traitement de données lesdits mots de commande et les convertissant en des signaux électriques d'amplitudes représentatives de la valeur binaire de ces mots de commande et des moyens (81, 82) d'amplification de ces signaux électriques générant en sortie un courant de commande de la diode laser de manière à générer une puissance optique en relation bi-univoque avec l'amplitude desdits signaux électriques.

## Patentansprüche

1. Verfahren zum Kalibrieren der optischen Leistung eines von einer Quelle (S) ausgesandten und auf einen optischen Aufzeichnungsträger (1) gerichteten Lichtstrahls, wobei dieser Träger zur Datenaufzeichnung bestimmt ist und mindestens eine Schicht eines unter dem Einfluß dieser Strahlung in seinen optischen Kennwerten veränderbaren Materials besitzt und wobei dieses Verfahren in einer Datenaufzeichnungsvorrichtung verwendet wird und Mittel (B) zur Bündelung eines durch ein die Daten repräsentierendes elektrisches Eingangssignal elektrisch modulierbaren optischen Schreibstrahls (F) auf die Oberfläche des optischen Aufzeichnungsträgers, Mittel (5, 6), mit denen der Schreibstrahl über die Oberfläche des Trägers geführt wird, optoelektrische Lesemittel (2, 3), deren Zusammenwirken mit den Änderungen der optischen Kennwerte der Oberfläche ein elektrisches Lesesignal ($V_s$) ergibt, und Steuermittel (4) aufweist, mit denen die Leistung des Schreibstrahls so kalibriert werden kann, daß das Lesesignal die zeitliche Verteilung der das elektrische Eingangssignal darstellenden Impulse in geeigneter Weise wiedergibt, dadurch gekennzeichnet, daß die Steuermittel die folgenden Verfahrensschritte durchführen:

a) in einem ersten Verfahrensschritt wird mindestens eine eine vorgebene Anzahl von aus einer Folge von Binärelementen eines ersten logischen Werts ("1") und eines zweiten logischen Werts ("0") gebildeten Teswörtern enthaltende Nachricht in Zonen (12, 13) aufgezeichnet, die von den Datenzonen getrennt sind, wobei die Binärwörter mit mehreren optischen Leistungsstufen des auf die lichtempfindliche Materialschicht gerichteten Strahls aufgezeichnet werden,

b) in einem anschließenden zweiten Verfahrensschritt

— werden die so aufgezeichneten binären Testwörter gelesen,

— wird für jedes Testwort die Dauer ($T_1$) der Binärelemente mit dem ersten logischen Wert und die Dauer ($T_0$) der Binärelemente mit dem zweiten logischen Wert gemessen,

— wird das Verhältnis zwischen diesen beiden Werten ($T_1/T_0$) ermittelt,

— wird mit Hilfe dieses Verhältnisses die optimale optische Schreibleistung bestimmt,

— und wird ausgehend von dieser Bestimmung eine optimale Steuergröße für die von der Quelle ausgesandte Leistung erarbeitet und gespeichert.

2. Verfahren nach Anspruch 1, dadurch gekennzeichnet, daß die binären Testwörter in Form von monotonen Folgen von Binärelementen geschrieben werden, die abwechselnd einen ersten logischen Wert ("1") und einen zweiten logischen Wert ("0") gleicher Zeitdauer aufweisen.

3. Verfahren nach Anspruch 2, dadurch gekennzeichnet, daß der Wert der optischen Leistung so festgelegt wird, daß ein Verhältnis ($T_1/T_0$) zwischen diesen beiden Zeitdauern möglichst nahe bei dem Wert 1 liegt.

4. Verfahren nach einem beliebigen der Ansprüche 1 bis 3, dadurch gekennzeichnet, daß für den Fall, daß der Aufzeichnungsträger als in Sektoren (110) organisierte Scheibe (1) ausgebildet ist, der Verfahrensschritt der Aufzeichnung die Aufzeichnung von mehreren gleichmäßig in diese Sektoren verteilten Nachrichten von Binärwörtern umfaßt.

5. Verfahren nach einem beliebigen der Ansprüche 1 bis 4, dadurch gekennzeichnet, daß für den Fall, daß der Aufzeichnungsträger von einer eine Ringzone (11) mit fest vorgegebenem inneren und äußerem Radius besitzenden Scheibe gebildet wird, wobei diese Zone zur Datenaufzeichnung bestimmt ist, der Verfahrensschritt der Aufzeichnung die Aufzeichnung mindestens zweier Nachrichten aus binären Testwörtern umfaßt, nämlich einer in einer Zone (13), die der Drehachse (0) mindestens so nahe liegt wie der innere Radius, und der underen in einer Zone (12), die von der Drehachse mindestens so weit entfernt wie der äußere Radius ist, und daß das Verfahren einen weiteren Verfahrensschritt aufweist, in dem die Funktion der Veränderung der optimalen Steuergröße in Bezug auf die ausgesandte Leistung entlang einer durch die Drehachse verlaufenden Achse durch Interpolation der für jedes der binären Testwörter bestimmten Werte ermittelt und gespeichert wird.

6. Verfahren nach einem beliebigen der Ansprüche 1 bis 5, dadurch gekennzeichnet, daß jedes binäre Testwort eine vorbestimmte Anzahl von Binärelementpaaren mit abwechselnden logischen Werten aufweist und daß die Bestimmung des Verhältnisses ($T_1/T_0$) bezüglich der Dauer der beiden logischen Werte durch Ausmittlung über die gegebene Anzahl von Paaren erhalten wird.

7. Verfahren nach einem beliebigen der Ansprüche 1 bis 6, dadurch gekennzeichnet, daß der Verfahrensschritt der Aufzeichnung der binären Testwörter automatisch in vorgegebene Zeitabständen erfolgt.

8. Vorrichtung zur Durchführung des Verfahrens nach einem beliebigen der Ansprüche 1 bis 7 in einem Daten-Schreib-Lesegerät in einer vorgegebenen Zone (11) eines optischen Aufzeichnungsträgers (1), der mindestens eine Schicht eines für Lichtstrahlung empfindlichen Materials besitzt, wobei die Vorrichtung eine Quelle (S) für einen Strahl (F) dieser Lichtstrahlung, Mittel ($O_b$, m) für den Zugriff zu dieser Zone (11) und zur Bündelung des Lichtstrahls (F) auf die empfindliche Materialschicht zur Datenaufzeichnung, optoelektronische Lesemittel (3) für diese Daten und Steuermittel (4) zur Festlegung der Leistung des Schreibstrahls aufweisen, dadurch gekennzeichnet, daß die Steuermittel Mittel (8) zur Einstellung der optischen Leistung der von der Quelle (S) ausgesandten Strahlung aufweisen, derart, daß in der Schicht aus lichtempfindlichem Material mindestens eine eine vorbestimmte Anzahl von binären Testwörtern enthaltende Nachricht aufgezeichnet wird, wobei diese Testwörter mit mehreren abgestuften Schreibleistungswerten aufgezeichnet werden und jedes Testwort durch abwechselnd einen ersten logischen Wert ("1") und einen zweiten logischen Wert ("0") darstellende Binärelemente gebildet werden, und daß die Steuermittel optoelektronische Lesemittel für diese aufgezeichneten Binärwörter und Mittel zur Umwandlung in ein elektrisches Binärsignal, Mittel (40) zur Erfassung der Dauer ($T_1$) der Binärelemente mit dem ersten logischen Wert ("1") und der Dauer ($T_0$) der Binärelemente mit dem zweiten logischen Wert ("0"), Mittel (42) zur Ermittlung und Speicherung eines Signals zur Steuerung der von der Quelle ausgesandten optische Leistung, wobei diese Mittel das Verhältnis ($T_1/T_0$) zwischen der Dauer der Binärelemente mit dem ersten logischen Wert ("1") und der Dauer der Binärelemente mit dem zweiten logischen Wert ("0") ermitteln und ein Signal zur Steuerung der von der Quelle (S) ausgesandten Leistung mit optimalen Pegel erarbeiten, und Mittel (41) aufweisen, die die Synchronisation des Betriebs der Erfassungsmittel (40) und der Bestimmungs- und Speichermittel (42) sowie der Mittel (8) zur Steuerung der von der Quelle ausgesandten optischen Leistung sicherstellen.

9. Vorrichtung nach Anspruch 8, dadurch gekennzeichnet, daß die Mittel (40) zur Erfassung der Dauer der Binärsignale aufweisen: einen ersten Binärzähler (404), der Taktsignale (H) über einen ersten Eingang ($e_{H1}$) während der ersten Zeitintervalle ($T_1$), in denen die gelesenen Binärsignale einen ersten logischen Wert ("1") besitzen, und der von diesen Taktsignalen (H) weitergeschaltet wird; einen zweiten Binärzähler (405), der die Taktsignale (H) über einen zweiten Eingang ($e_{H2}$) während zweiter Zeitintervalle ($T_0$) empfängt, in denen die gelesenen Binärsignale einen zweiten logischen Wert ("0") besitzen, und der von diesen Signalen weitergeschaltet wird; logische Umschaltmittel (401, 402), die die Taktsignale (H) während der ersten Zeitintervalle an den ersten Binärzähler (404) und während der zweiten Zeitintervalle an den zweiten Binärzähler (405) anlegen; logische Mittel (400), die die Übertragung der Taktsignale während eines Gesamtzeitintervalls entsprechend der für das Lesen und die Umwandlung der binären Testwörter erforderlichen Zeit zulassen; und Mittel zur Rückstellung (RAZ) der beiden Binärzähler (404, 405), und daß die beiden Binärzähler parallele Ausgänge ($SC_1$, $SC_2$) besitzen, die an diesen Ausgängen ein erstes die Gesamtdauer der Binärsignale mit dem ersten logischen Wert ("1") darstellendes Binärwort bzw. ein zweites, die Gesamtdauer der Binärsignale mit dem zweiten logischen Wert ("0") darstellendes Binärwort liefern.

10. Vorrichtung nach Anspruch 9, dadurch gekennzeichnet, daß die Mittel (42) zur Ermittlung und Speicherung eines Steuersignals für die von der Quelle (S) ausgesandte optische Leistung von Datenverarbeitungsmitteln gebildet werden, die einen Speicher zur Registrierung dieses von dem ersten und dem zweiten Zähler (404, 405) gelieferten Binärworts aufweisen, die das Verhältnis ($T_1/T_0$) zwischen diesen beiden Binärwörtern errechnen und im Datenspeicher ein binäres Steuerwort entsprechend dem Wert der optischen Leistung abspeichern, die von der Quelle ausgesandt wird, wenn das Verhältnis ($T_1/T_0$) dem Wert Eins am nächsten kommt.

11. Vorrichtung nach Anspruch 10, dadurch gekennzeichnet, daß für den Fall, daß bei der Speicherung binärer Testwörter mindestens zwei binäre Testwörter eingespeichert werden, die Datenverarbeitungsmittel (42) die Interpolation nach einem vorgegebenen Gesetz zwischen den Steuerwörtern durchführen, die den Werten der von der Quelle ausgesandten optischen Leistung entsprechen, für die das Verhältnis ($T_1/T_0$) dem Wert Eins am nächsten kommt.

12. Vorrichtung nach einem beliebigen der Ansprüche 10 und 11, dadurch gekennzeichnet, daß die Datenverarbeitungsmittel (42) von einem Mikroprozessor gebildet werden.

13. Vorrichtung nach einem beliebigen der Ansprüche 8 bis 12, dadurch gekennzeichnet, daß für den Fall, daß die Quelle (S) zur Aussendung eines Lichtstrahls (F) eine Laserdiode ($L_a$) ist, die Mittel (8) zur Einstellung der Leistung dieser Quelle einen Digital-Analog-Wandler (80) enthalten, der von den Datenverarbeitungsmitteln (42) die Steuerwörter zugeführt erhält und sie in elektrische Signale umwandelt, deren Amplituden für die Binärwerte dieser Steuerwörter repräsentativ sind, und daß die Steuermittel (8) weiter Mittel (81, 82) aufweisen, die diese elektrischen Signale verstärken und am Ausgang einen Steuerstrom für die Laserdiode erzeugen, derart, daß eine ein-eindeutige Beziehung zwischen der optischen Leistung und der Amplitude dieser elektrischen Signale gebildet wird.

## Claims

1. A method for calibrating the optical power of a focussed light beam emitted by a source (S), said beam being applied to an optical substrate (1) intended to record data and comprising at least one layer of a material having optical characteristics which may be modified under the influence of said light beam, the method being used in a data recording device comprising means (B) for focussing an optical write-in beam (F) on the surface of said optical substrate, said beam being able to be electrically modulated by an incident electric signal representing said data, means (5, 6) ensuring the scanning of said surface by said write-in beam, opto-electric read-out means (2, 3) whose interaction with the modifications of the optical characteristics of said surface produces an electric read-out signal $(V_s)$, and control means (4) allowing to adjust the power of the write-in beam (F) in such a way that the read-out signal conveniently reproduces the time distribution of the pulses constituting said incident electric signal, characterized in that the control means perform the following steps:

a) in a first step, at least one message including a predetermined number of binary test words constituted by a succession of binary elements having a first logic value ("1") and a second logic value ("0") is recorded in zones (12, 13) distinct from the data zones, the binary words being recorded with a plurality of stepped optical power levels of the the radiated beam applied to said layer of sensitive material,

b) then, during a second step

— the binary test words are read out which have previously been recorded,

— for each test word, the duration $(T_1)$ of the binary elements having the first logic value and the duration $(T_0)$ of the binary elements having the second logic value are measured,

— the ratio between these two durations $(T_1/T_0)$ is determined,

— the optimum optical write-in power is determined from this ratio,

— and an optimum control value for the power to be emitted by the source is elaborated on the basis of this determination, and this value is stored in memory.

2. A method according to claim 1, characterized in that the binary test words are recorded in the form of monotonic sequences of binary elements showing alternately a first logic value ("1") and a second logic value ("0") of identical durtions.

3. A method according to claim 2, characterized in that the optical power level is determined by the ratio $(T_1/T_0)$ between the durations which is closest to unity.

4. A method according to any one of claims 1 to 3, characterized in that, the substrate being constituted by a disk (1) which is organized in sectors (110), the recording step comprises the recording of serveral messages of binary words which are regularly distributed in these sectors.

5. A method according to any one of claims 1 to 4, characterized in that, the substrate being constituted by a disk comprising an annular area (11) with predetermined inner and outer radii intended for data recording, the recording step comprises the recording of at least two messages of binary test words, one being located in an area (13) which is at least as close to the rotation axis (0) as the inner radius and the other being located in an area (12) which is at least as far away from the rotation axis as the outer radius, and that the method includes an additional step in which the law of variation of the optimum control value for the power emitted alongside an axis intersecting the rotation axis is determined by interpolating between values determined for each one of said binary test words, and in which this law is stored in memory.

6. A method according to any one claims 1 to 5, characterized in that each binary test word comprises a predetermined number of pairs of binary elements of alternate logic level and that the ratio $(T_1/T_0)$ between the durations of the first logic level and that of the second logic level is determined by establishing a mean ratio out of said predetermined number.

7. A method according to any one of claims 1 to 6, characterized in that the step of recording binary test words is performed automatically at predetermined time intervals.

8. A device for implementing the method according to any one of claims 1 to 7 in a data write-in and read-out apparatus, in a predetermined area (11) of an optical substrate (1) having at least one layer of a material which is sensitive to light radiation, the device comprising a source (S) emitting a beam (F) of this light radiation, means $(O_b, m)$ allowing access to said area (11) and focussing said beam (F) onto said layer of sensitive material in view of the data recording, opto-electronic read-out means (3) for reading these data, control means (4) allowing the write beam power to be adjusted, characterized in that the control means include means (8) for adjusting the optical power of the radiation emitted by the source (S) such that at least one message including a predetermined number of binary test words associated to several stepped write power levels is engraved into said light sensitive material layer, each test word being constituted by binary elements having alternately a first logic level ("1") and a second logic level ("0"), opto-electronic read-out means (3) for reading said recorded test words and for converting them into a binary electric signal, means (40) for evaluating the duration $(T_1)$ of the binary elements having a first logic level ("1") and the duration ($T_0$) of the binary elements having a second logic level ("0"); means (42) for determining and storing a control signal for defining the optical power emitted by the source, these means determining the ratio ($T_1/T_0$) between the duration of the binary elements at a first logic level ("1") and that of the binary elements at a second logic level ("0"), and elaborating a signal allowing to adjust the optimum power of the source (S), means (41) for synchronizing the operation of the evaluation means (40) and the means for determining and storing (42) and the means (8) allowing the optical power emitted by the source to be adjusted.

9. A device according to claim 8, characterized in that the means (40) for evaluating the durations of the binary signals comprise a first binary counter (404) whose first input ($e_{H1}$) receives clock pulses (H) during first time intervals ($T_1$) during which the read-out binary signals present a first logic level ("1"), this counter being incremented by these clock pulses (H), a second binary counter (405) receiving the clock signal (H) via a second input ($e_{H2}$) during second time intervals ($T_0$) during which the read-out binary signals present a second logic level ("0"), this counter being incremented by these clock signals, logic means (401, 402) for switching the clock signals (H) towards the first binary counter (404) during the first time intervals and towards the second binary counter (405) during the second time intervals, logic enabling means (400) allowing the clock pulses to be transmitted during a total time interval corresponding to the time of reading out and converting the binary test words, and means (RAZ) for resetting both counters (404, 405); and that both counters are provided with parallel outputs ($SC_1$, $SC_2$) supplying at their respective outputs a first binary word representing the entire duration of the binary signals at the first logic level ("1") and at the second logic level ("0") respectively.

10. A device according to claim 9, characterized in that the means (42) for determining and storing a signal for adjusting the optical power emitted by the source (S) are constituted by data processing means including a memory for storing these data, these means receiving from said first and second counters (404, 405) said first and second binary words, elaborating the ratio ($T_1/T_0$) between these two binary words and storing in the data memory a binary adjustment word corresponding to the optical power level emitted by the source which allows said ratio ($T_1/T_0$) to be closest to unity.

11. A device according to claim 10, characterized in that, the recording of binary test words including the recording of at least two binary test words, the processing means (42) interpolate according to a predetermined law between the adjustment words corresponding to those optical power levels emitted by the source for which said ratio ($T_1/T_0$) is closest to unity.

12. A device according to any one claims 10 or 11, characterized in that the data processing means (42) are constituted by a microprocessor.

13. A device according to any one of claims 8 to 12, characterized in that, the source (S) emitting the light beam (F) being a laser diode ($L_a$), the means (8) for adjusting this source include a D/A converter (80) receiving from the data processing means said adjustment words and convverting them into electric signals, the amplitudes of which are representative of the binary values of these adjustment words, and means (81, 82) for amplifying these electric signals and for generating one optical power level in bi-uniform correspondence with the amplitude of said electric signals.

# FIG.1

EP 0 126 682 B1

# FIG.2

# FIG.6

# FIG.3

# FIG.4

# FIG.5

# FIG.7

# FIG.8